Europäisches Patentamt

(19) European Patent Office

Office européen des brevets

(11) Numéro de publication: **0 183 606**
**A1**

## (12) DEMANDE DE BREVET EUROPEEN

(21) Numéro de dépôt: **85402225.8**

(22) Date de dépôt: **15.11.85**

(51) Int. Cl.⁴: **G 01 F 1/58**

(30) Priorité: **19.11.84 FR 8417620**

(43) Date de publication de la demande:
**04.06.86 Bulletin 86/23**

(84) Etats contractants désignés:
**BE DE GB IT NL**

(71) Demandeur: **NOVATOME**
**La Boursidière R.N. 186**
**F-92357 Le Plessis Robinson(FR)**

(72) Inventeur: **Dumay, Jean-Jacques**
**16 route de Rambouillet**
**F-78720 Dampierre(FR)**

(74) Mandataire: **Bressand, Georges et al,**
**c/o CABINET LAVOIX 2 Place d'Estienne d'Orves**
**F-75441 Paris Cedex 09(FR)**

(54) **Dispositif de mesure du débit d'un métal liquide du type électromagnétique et à double enveloppe.**

㊼ L'invention concerne un dispositif de mesure du débit d'un métal liquide du type électromagnétique et à double enveloppe.

Le dispositif comporte un tube métallique central (5) dans lequel circule le métal liquide et un tube métallique externe (4) coaxial au tube central (5) constituant les deux enveloppes entre lesquelles est maintenue une atmosphère gazeuse. Un moyen (10) permet de créer un champ magnétique de direction radiale par rapport aux deux enveloppes (4, 5). Deux électrodes (13, 13' ou 14–14') permettent de mesurer la force électromotrice créée par le champ magnétique dans le métal liquide en circulation. Chacune des électrodes (13, 13' ou 14, 14') est constituée par un câble coaxial comportant un conducteur central (15), une gaine métallique (16) et un isolant minéral intermédiaire (17). Le conducteur central (15) et la gaine (16) sont soudés sur le tube interne (5). Seule la gaine métallique externe (16) est soudée sur le tube externe (4).

L'invention s'applique, en particulier, aux débitmètres électromagnétiques pour le sodium primaire des réacteurs nucléaires à neutrons rapides.

EP 0 183 606 A1

./...

Croydon Printing Company Ltd

FIG.1

L'invention concerne un dispositif de mesure du débit d'un métal liquide, du type électromagnétique et à double enveloppe.

De tels dispositifs ou débitmètres électromagnétiques peuvent être utilisés en particulier pour mesurer des débits de sodium liquide dont la température peut aller jusqu'à 600°C, dans les réacteurs nucléaires à neutrons rapides refroidis par du sodium liquide. Les débitmètres électromagnétiques peuvent permettre de mesurer le débit du sodium dans les différentes parties du circuit secondaire ou même dans certaines parties du circuit primaire.

Ces appareils fonctionnent sur un principe utilisant l'effet Faraday, suivant lequel une force électromotrice est induite dans un conducteur se déplaçant en coupant un champ magnétique. Dans le cas où le conducteur est un métal liquide, la force électromotrice induite est proportionnelle à la vitesse de ce métal liquide en circulation et à l'amplitude du champ magnétique. On maintient donc le champ magnétique constant et l'on mesure la force électromotrice induite dans le métal liquide lors de sa traversée d'une zone soumise au champ magnétique.

Les débitmètres électromagnétiques connus comportent un tube en acier non magnétique dans lequel circule le métal liquide dont on mesure le débit, un moyen permettant de créer un champ magnétique de direction radiale par rapport au tube qui est disposé dans une zone soumise à ce champ magnétique ainsi que deux électrodes soudées sur le tube aux extrémités d'un diamètre de ce tube perpendiculaire au champ magnétique. Ces électrodes sont constituées par des conducteurs électriques qui sont reliés à un appareil de mesure de la force électromotrice induite lors du passage du métal liquide dans la zone du tube soumise au champ magnétique.

Dans certains cas, en particulier lorsqu'on veut effectuer des mesures de débit sur le circuit primaire d'un

2

réacteur nucléaire à neutrons rapides refroidi par du sodium liquide, on utilise des circuits à double paroi ; les débitmètres sont donc à double enveloppe. La première enveloppe est constituée par le tube dans lequel passe le sodium liquide et la seconde enveloppe par un tube coaxial à la première enveloppe de plus grand diamètre disposé à l'extérieur de celle-ci. L'espace ménagé entre les deux enveloppes permet la circulation d'un gaz de préchauffage assurant également une double sécurité du circuit.

Dans ces débitmètres à double enveloppe, il est nécessaire que les électrodes traversent le tube extérieur en étant isolées électriquement de ce tube avec une parfaite étanchéité de la traversée. De telles exigences sont difficiles à satisfaire dans le cas de tubes qui peuvent être portés à des températures élevées.

Le but de l'invention est donc de proposer un dispositif de mesure du débit d'un métal liquide, du type électromagnétique et à double enveloppe, comportant un tube métallique central dans lequel circule le métal liquide et un tube métallique externe coaxial au tube central, constituant les deux enveloppes du dispositif entre lesquelles peut circuler du gaz de préchauffage, un moyen permettant de créer un champ magnétique de direction radiale par rapport aux deux enveloppes et deux électrodes fixées à l'une de leurs extrémités sur le tube central en des positions situées aux extrémités d'un diamètre de ce tube perpendiculaire à la direction du champ magnétique, dans la zone où il s'exerce, ces électrodes conductrices en contact électrique avec le tube central traversant la seconde enveloppe de façon à être reliées à un appareil de mesure de la force électromotrice créée dans le métal liquide en circulation dans la zone soumise au champ magnétique et dépendant du débit de ce métal liquide, dispositif qui permette d'assurer facilement une traversée parfaitement étanche du tube externe par les électrodes qui restent cependant parfaitement isolées électriquement de ce tube externe.

Dans ce but, chacune des électrodes est constituée par un câble à structure coaxiale comportant un conducteur central, un isolant minéral intermédiaire et une gaine métallique externe, le conducteur central et la gaine métallique sont soudés sur la paroi du tube central et la gaine métallique externe seule est soudée sur le tube externe, le conducteur central étant séparé de ce tube externe, au niveau de la traversée, par l'isolant minéral.

Afin de bien faire comprendre l'invention, on va maintenant décrire en se référant aux figures jointes en annexe, un débitmètre suivant l'invention utilisable pour la mesure d'un débit de sodium liquide, suivant plusieurs variantes de réalisation.

La figure 1 est une vue en élévation avec coupe partielle d'un dispositif de mesure de débit suivant l'invention.

La figure 2 est une vue schématique en coupe des deux enveloppes d'un dispositif de mesure de débit suivant l'invention montrant les jonctions soudées des électrodes sur ces enveloppes, suivant un premier mode de réalisation.

La figure 2a est une vue en coupe d'une jonction soudée entre une électrode et l'enveloppe interne, suivant une variante de réalisation.

La figure 3 est une demi-vue en coupe des deux enveloppes d'un dispositif de mesure de débit suivant l'invention montrant les jonctions soudées entre une électrode et ces enveloppes, suivant un second mode de réalisation.

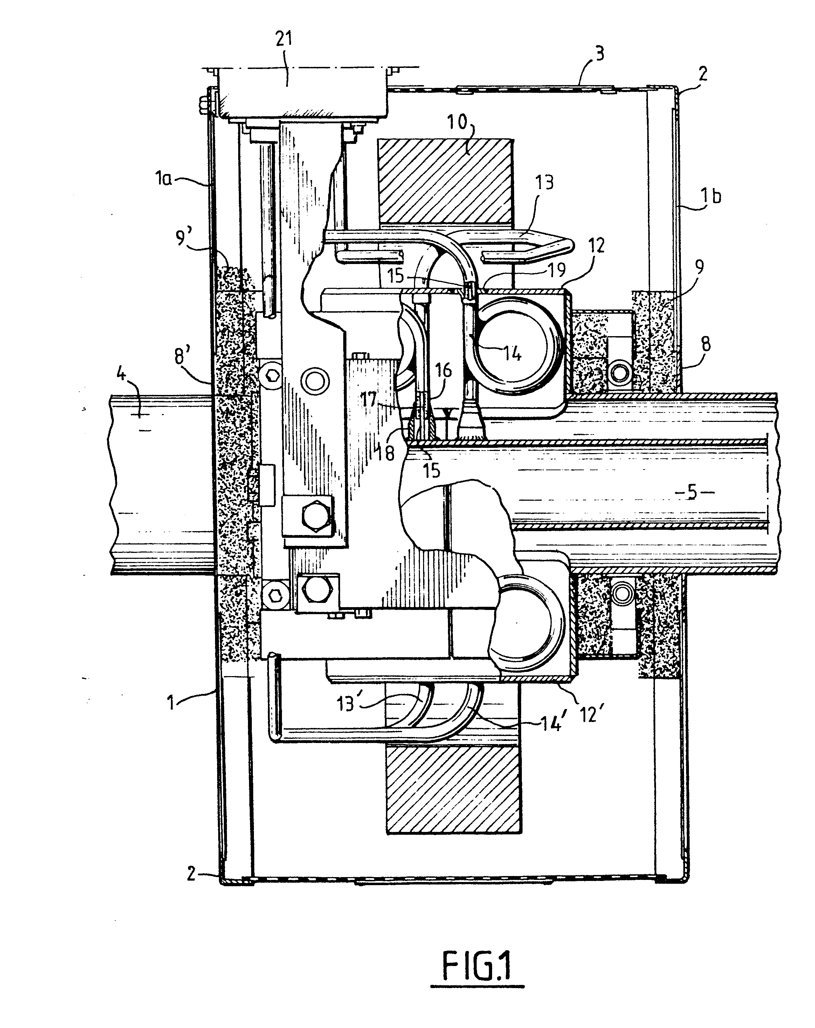

Sur la figure 1, on voit un débitmètre électromagnétique à double enveloppe comportant un boitier 1 de forme parallèlépipèdique assurant à la fois le support et la protection de la partie électromagnétique du débitmètre. Ce boitier 1 est constitué par une ossature en profilé 2 et des parois grillagées 3. Deux faces parallèles verticales 1a et 1b sont traversées en leur partie centrale par un tube horizontal 4 constituant la seconde enveloppe du débitmètre. A l'intérieur de ce tube externe 4, est placé un tube central 5, de façon coaxiale. Le tube 5 destiné à recevoir le sodium liquide en circulation constitue la première enveloppe du débitmètre. Les tubes 4 et 5 sont fixés sur le boitier 1 par l'intermédiaire de flasques 8 et 8' et de pièces en matière réfractaire 9 et 9'. Les extrémités des conduits 4 et 5 sont saillantes par rapport au boitier, ce qui permet de les raccorder à une tubulure sur laquelle on effectue la mesure du débit de sodium. L'espace annulaire entre les enveloppes 4 et 5 reçoit, lorsque le débitmètre est en service, un gaz neutre tel que l'argon ou l'azote qui peut servir en particulier au préchauffage à la température de service du débitmètre.

A l'intérieur du boitier 1 est disposé un circuit magnétique de forme annulaire 10 comportant un aimant permanent. Les tubes enveloppes 4 et 5 sont disposés dans l'entrefer de ce circuit magnétique de façon qu'un champ magnétique de direction horizontale et radiale par rapport aux tubes 4 et 5 s'exerce dans le volume interne du conduit 5 recevant le sodium liquide en circulation. Ce champ magnétique est perpendiculaire au plan de la figure 1 et s'exerce dans la partie centrale du boitier 1.

Dans cette partie centrale du boitier 1, sont placés deux carters cylindriques 12 et 12' soudés sur le tube externe 4 le long d'une ouverture dans la paroi de ce tube. Sur la plaque plane de fermeture de chacun de ces boitiers sont fixées deux électrodes 13-14 et 13'-14' réalisées sous forme de câbles coaxiaux.

Chacune des électrodes 13 ou 14 comporte un conducteur central 15, une gaine métallique externe 16 et un isolant minéral intermédiaire 17 résistant à la chaleur.

Le conducteur central 15 est soudé à son extrémité sur la paroi du tube central 5 et la gaine métallique externe 16 est soudée par l'intermédiaire d'un manchon

5

18, également sur la paroi du tube central 5.

Seule la gaine métallique externe 16 est soudée sur le carter 12 solidaire du tube externe 4, par l'intermédiaire d'une rondelle de soudage 19. Le conducteur central 15 est isolé du boitier 12 et donc du tube externe 4 par l'intermédiaire de l'isolant minéral 17.

Le conducteur central 15 et la gaine 16 sont en des métaux ou alliages permettant leur soudure sur le tube central 5 ou le boitier 12. En particulier, le conducteur central 15 est constitué par un matériau métallique qui peut se souder sur l'acier inoxydable constituant le tube central 5 recevant le sodium liquide chaud.

A l'intérieur des carters 12 et 12', les électrodes 13-14 ou 13'-14' sont enroulées pour constituer une spire permettant de faciliter le montage et le soudage de ces électrodes et d'absorber éventuellement les dilatations différentielles.

Les électrodes 13 et 13' d'une part et 14 et 14' d'autre part sont fixées sur le tube central 5 aux extrémités d'un diamètre de ce tube de direction verticale c'est-à-dire perpendiculaire au champ magnétique s'exerçant dans la zone centrale du boitier 1 à l'intérieur du tube 5.

Les électrodes 13-14 et 13'-14' après leur traversée de la paroi du carter 12 sont reliées à la partie supérieure du boitier, à une pièce de jonction électrique 21 permettant le branchement sur ce boitier d'un appareil de mesure de la force électromotrice développée dans le sodium liquide entre les électrodes 13 et 13' d'une part et 14 et 14' d'autre part. En effet, lorsque le tube central 5 est parcouru par le sodium liquide en circulation dont on mesure le débit, le champ magnétique s'exerçant dans ce sodium liquide, une force électromagnétique est créée dans une direction perpendiculaire à la fois à la direction de circulation du sodium dans le tube 5 et au champ magnéti-

6

que horizontal s'exerçant dans ce sodium, c'est-à-dire suivant la direction verticale joignant les électrodes 13 et 13' ou 14-14'.

La mesure n'est faite qu'avec une seule paire d'électrodes telles que 13 et 13' ou 14 et 14', l'autre n'étant utilisée qu'en cas de défaillance de la première.

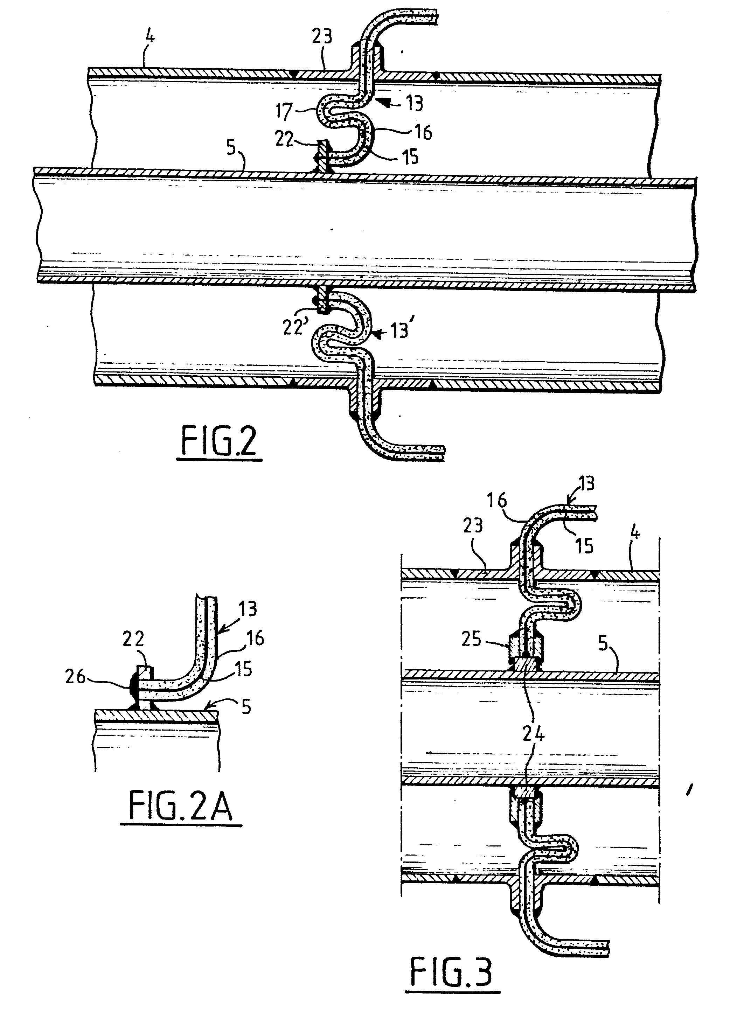

On va maintenant se reporter aux figures 2 et 3 pour décrire de façon plus précise les jonctions entre les électrodes et les deux enveloppes d'un débitmètre électromagnétique selon l'invention.

Les éléments correspondants sur les figures 2 et 3 d'une part et 1 d'autre part portent les mêmes repères.

Sur la figure 2, on voit un premier mode de réalisation des jonctions soudées entre une électrode 13 réalisée sous la forme d'un câble coaxial et les deux enveloppes 4 et 5 du débitmètre. Sur le tube central 5 ont été soudées deux pattes 22 et 22' aux extrémités d'un diamètre du tube central 5 de direction verticale, préalablement au raccordement des électrodes 13 et 13'. Ces deux électrodes sont raccordées de la même façon sur les deux tubes 4 et 5 et seuls seront décrits les éléments relatifs à l'électrode 13.

La patte de soudage 22 comporte une ouverture permettant le passage du conducteur central 15 qui est soudé sur cette patte sur sa face d'aboutissement après la traversée. La gaine métallique 16 est soudée sur l'autre face de la patte 22.

La traversée du tube externe 4 se fait par l'intermédiaire d'une rondelle de soudage 23 sur laquelle l'enveloppe métallique 16 seule est soudée, le conducteur central 15 étant séparé de cette rondelle de soudage 23 et du tube central 4 par l'isolant minéral 17.

Sur la figure 2a, on voit une variante de réalisation de la fixation de l'électrode 13 sur le tube

7

central 5, la patte 22 étant percée de façon à être traversée par l'électrode 13 dont la gaine métallique extérieure 16 et le conducteur central 15 sont soudés tous deux par un point de soudure unique 26 sur la seconde face de la patte 22, après traversée de celle-ci.

Sur la figure 3, on voit un second mode de réalisation de la fixation par soudure d'une électrode 13 sous forme de câble coaxial sur les enveloppes 4 et 5 d'un débitmètre électromagnétique. La fixation sur le tube central 5 se fait par l'intermédiaire d'un bossage 24 sur lequel est soudé le conducteur central 15 de l'électrode. Un manchon, préalablement enfilé sur l'extrémité de l'électrode 13 est fixé par soudage sur le bossage 24 et la gaine métallique externe 16 de l'électrode 13 est ensuite soudée sur ce manchon 25. La liaison par soudage avec le tube externe 4 se fait comme précédemment, une rondelle de soudage 23 ayant été préalablement enfilée sur l'électrode 13 pour être ensuite soudée à sa périphérie sur un trou prévu dans le tube externe 4 constituant la seconde enveloppe du débitmètre.

Dans le premier mode de réalisation représenté à la figure 2, les opérations de raccordement comportent les étapes successives suivantes : soudure des pattes 22 sur le tube central 5, présentation de l'électrode 13 sur laquelle est enfilée la rondelle 23, soudage du conducteur central 15 et de la gaine extérieure 16 sur la patte 22, puis soudage de la rondelle 23 sur l'enveloppe 4, le soudage de la rondelle 23 sur la gaine 16 étant réalisé au préalable en atelier.

Dans le second mode de réalisation de la figure 3, les opérations successives de raccordement sont les suivantes : soudage des bossages 24 sur le tube central 5, présentation des électrodes 13 sur lesquelles ont été enfilées successivement les rondelles 23 et les manchons 25, soudage des conducteurs 15 sur les bossages 24 correspondants, soudage des manchons 25 sur les bossages 24, soudage de la gaine métallique 16 sur le manchon 25, soudage de la rondelle 23 sur le tube externe 4, le soudage de la rondelle 23 sur la gaine 16 ayant été réalisé au préalable.

Après sa mise en service, une atmosphère de gaz inerte peut être maintenue entreles deux enveloppes 4 et 5 du débitmètre, les traversées du câble électrode 13 étant parfaitement étanches. De plus, le conducteur central 15 est parfaitement isolé du tube externe 4 par l'isolant minéral 17 au niveau de sa traversée.

Les principaux avantages du dispositif suivant l'invention sont de faciliter le raccordement des électrodes et de permettre l'obtention de raccordements de grande résistance aux diverses sollicitations et en particulier aux sollicitations thermiques.

D'autre part, dans le cas où il est nécessaire de s'assurer d'une parfaite intégrité du tube recevant le sodium liquide, le soudage préalable de pattes ou bossages sur ce tube en atelier suivi de contrôles permet de réduire au minimum les risques lors des opérations ultérieures de raccordement des électrodes.

L'invention ne se limite pas aux modes de réalisation qui ont été décrits ; elle en comporte au contraire toutes les variantes. On peut imaginer, par exemple, d'autres modes de raccordement des électrodes avec ou sans pièces intermédiaires.

Enfin, on peut imaginer l'utilisation du dispositif de mesure de débit suivant l'invention pour d'autres métaux liquides que le sodium.

REVENDICATIONS

1.- Dispositif de mesure du débit d'un métal liquide du type électromagnétique et à double enveloppe, comportant un tube métallique central (5) dans lequel circule le métal liquide et un tube métallique externe (4) coaxial au tube central (5), constituant les deux enveloppes du dispositif entre lesquelles est maintenue une atmosphère gazeuse, un moyen (10) permettant de créer un champ magnétique de direction radiale par rapport aux deux enveloppes (4) (5) et deux électrodes (13, 13' - 14, 14') fixées à l'une de leurs extrémités sur le tube central (5) en des positions situées aux extrémités d'un diamètre de ce tube (5) perpendiculaire à la direction du champ magnétique, dans la zone où il s'exerce, ces électrodes conductrices en contact électrique avec le tube central (5) traversant la seconde enveloppe (4) de façon à être reliées à un appareil de mesure de la force électromotrice créée dans le métal liquide en circulation dans la zone soumise au champ magnétique et dépendant du débit de ce métal liquide,
caractérisé par le fait que chacune des électrodes (13, 13' 14, 14') est constituée par un câble à structure coaxiale comportant un conducteur central (15), une gaine métallique externe (16) et un isolant minéral intermédiaire (17), que le conducteur central (15) et la gaine métallique (16) sont soudés sur la paroi du tube central (5) et que la gaine métallique externe (16) seule est soudée sur le tube externe (4), le conducteur central (15) étant séparé de ce tube externe (4), au niveau de la traversée, par l'isolant minéral (17).

2.- Dispositif de mesure suivant la revendication 1,
caractérisé par le fait que les électrodes (13, 13' - 14, 14') ont chacune leur conducteur central (15) et leur gaine métallique externe (16) soudés sur une patte (22) préalablement fixée par soudage sur le tube central (5).

3.- Dispositif de mesure de débit suivant la revendication 2,
caractérisé par le fait que la patte (22) est percée pour le passage du conducteur (15) qui est soudé sur la face de la patte (22) où il débouche, la gaine métallique (16) étant soudée sur l'autre face.

4.- Dispositif de mesure suivant la revendication 2,
caractérisé par le fait que la patte (22) est percée pour le passage de l'électrode (13) dans son ensemble, le conducteur (15) et la gaine métallique externe (16) étant soudés sur la face de la patte (22) sur laquelle ils débouchent, par un seul point de soudure (26).

5.- Dispositif de mesure suivant la revendication 1,
caractérisé par le fait que la gaine métallique externe (16) est soudée sur le tube central (5) par l'intermédiaire d'un manchon (18, 25) préalablement enfilé sur l'électrode (13).

6.- Dispositif de mesure suivant la revendication 5,
caractérisé par le fait que le conducteur central (15) est soudé sur le tube central (5) par l'intermédiaire d'un bossage (24) sur lequel est également soudé le manchon (25).

7.- Dispositif de mesure suivant l'une quelconque des revendications 1 à 6,
caractérisé par le fait que l'électrode (13) est soudée sur le tube externe (4) par l'intermédiaire d'une rondelle (19, 23) préalablement enfilée sur l'électrode (13).

8.- Dispositif de mesure suivant la revendication 7,
caractérisé par le fait que la rondelle (19) est soudée sur le tube externe (4) par l'intermédiaire d'une paroi plane d'un carter (12) fixé sur le tube externe (4), le long d'une ouverture dans sa paroi.

0183606

FIG.1

0183606

FIG.2

FIG.2A

FIG.3

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| X | US-A-3 736 798 (WOOD et al.)<br>* Figures 1,2,6; colonne 1, lignes 42-53; colonne 2, ligne 16 - colonne 3, ligne 5; colonne 3, lignes 32-40 *<br><br>--- | 1,2,5 | G 01 F 1/58 |
| A | US-A-2 766 621 (RAYNSFORD et al.)<br>* Colonne 2, lignes 14-20 *<br><br>----- | 1 | |

DOMAINES TECHNIQUES
RECHERCHES (Int. Cl.4)

G 01 F

Le présent rapport de recherche a été établi pour toutes les revendications

| Lieu de la recherche | Date d'achèvement de la recherche | Examinateur |
|---|---|---|
| LA HAYE | 17-02-1986 | NUIJTEN E.M. |